(19) Europäisches Patentamt
European Patent Office
Office européen des brevets

(11) **EP 1 923 787 A2**

(12) **EUROPÄISCHE PATENTANMELDUNG**

(43) Veröffentlichungstag:
**21.05.2008 Patentblatt 2008/21**

(51) Int Cl.:
***G06F 11/10*** *(2006.01)*

(21) Anmeldenummer: **07019427.9**

(22) Anmeldetag: **04.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **12.10.2006 DE 102006048359**
**19.07.2007 DE 102007033746**

(71) Anmelder: **Giesecke & Devrient GmbH**
**81677 München (DE)**

(72) Erfinder: **Stocker, Thomas**
**81739 München (DE)**

(54) **Verwaltung von Datenobjekten in einem Haldenspeicher**

(57) Bei einem Verfahren zur Verwaltung von Datenobjekten (30x) in einem Haldenspeiclier sind die Datenobjekte (30x) mit Prüfsummen (CHK) gesichert, und der Zugriff auf die Datenobjekte (30x) erfolgt über logische Referenzen (LR), deren Zuordnung zu den Datenobjekten (30x) durch Umsetzdaten bestimmt wird. Das Verfahren ist dadurch weitergebildet, dass in die Berechnung einer Prüfsumme (CHK, CCHK) eines Datenobjekts (30x) zumindest ein Teil des Datenobjekts (30x) und eine dem Datenobjekt (30x) zugeordnete logische Referenz (LR) eingehen. Eine programmgesteuerte Vorrichtung und ein Computerprogrammprodukt weisen entsprechende Merkmale auf. Die erfindungsgemäße Verwaltung von Datenobjekten weist hohe Effizienz bei guter Absicherung gegen Fehler und/ oder Manipulationen auf.

Fig. 7

EP 1 923 787 A2

**Beschreibung**

Die Erfindung betrifft allgemein das technische Gebiet der Speicherverwaltung und spezieller das Gebiet der Verwaltung eines auch als *Heap* bezeichneten Haldenspeichers. Besonders eignet sich die Erfindung zum Einsatz bei tragbaren Datenträgern, die beispielsweise als Chipkarte *(Smart Card)* oder als kompaktes Chipmodul in unterschiedlichen Bauformen ausgestaltet sein können. Die Erfindung ist jedoch nicht auf dieses Einsatzgebiet beschränkt, sondern allgemein zur Verwaltung eines Haldenspeichers bei programmgesteuerten Vorrichtungen einsetzbar.

Haldenspeicher sind in der Computertechnik in den verschiedensten Ausgestaltungen gut bekannt. Auf dem Gebiet der tragbaren Datenträger sind Haldenspeicher beispielsweise bei Datenträgern vorgesehen, die nach dem von der Firma Sun Microsystems, Inc., Kalifornien, USA, definierten *Java-Card™*-Standard ausgebildet sind. Solche Datenträger weisen eine Laufzeitumgebung (JCRE = *Java Card Runtime Environment)* auf, die neben vielen anderen Aufgaben auch das Anlegen neuer Datenobjekte im Haldenspeicher übernimmt. Ab Version 2.2 der *Java-Card*-Spezifikation ist ferner eine optionale Speicherbereinigung *(Garbage Collection)* vorgesehen, die unreferenzierte Datenobjekte im Haldenspeicher löscht und den frei gewordenen Speicherplatz einer Wiederverwendung zuführt.

WO 2005/093580 A1 beschreibt mehrere Verfahren zur Speicherbereinigung in einem Haldenspeicher. Bei manchen dieser Verfahren wird der Haldenspeicher defragmentiert. Hierbei werden nicht-löschungsreife Datenobjekte verschoben, um freie Speicherbereiche miteinander zu vereinigen und somit einen größeren, zusammenhängenden, freien Speicherplatz zu bilden.

Wenn sich der physikalische Speicherort eines Datenobjekts im Zuge einer Defragmentierung oder eines sonstigen Vorgangs ändert, muss natürlich sichergestellt werden, dass auf das Datenobjekt nach wie vor zugegriffen werden kann. Nach einem von der Giesecke & Devrient GmbH zumindest intern verwendeten Verfahren wird hierzu eine indirekte Referenzierung verwendet. Dabei wird jedes Datenobjekt nicht durch seine physikalische Adresse, sondern durch eine logische Referenz bezeichnet. Diese logische Referenz wird für alle Bezugnahmen auf das Datenobjekt verwendet, also z.B. in Feldern gespeichert, die auf das Datenobjekt verweisen.

Zum Zugriff auf das Datenobjekt wird die logische Referenz mittels eines Zuordnungsverfahrens in die aktuelle physikalische Adresse des Datenobjekts umgesetzt. Hierzu werden Umsetzdaten verwendet, die z.B. in Form einer Umsetztabelle mit je einem Eintrag für jedes Datenobjekt organisiert sein können. Wenn sich nun die physikalische Adresse eines Datenobjekt ändert, braucht nur der entsprechende Eintrag in der Umsetztabelle angepasst zu werden. Die Verweise auf das Datenobjekt brauchen nicht geändert zu werden, weil die darin enthaltene logische Referenz gleich bleibt.

Bei tragbaren Datenträgern und anderen sicherheitskritischen oder fehlergefährdeten Systemen ist es übliche Praxis, wichtige Daten durch Fehlererkennungs- und/ oder Fehlerkorrekturcodes zu sichern. Ein Überblick über bekannte Verfahren findet sich in dem Buch "Handbuch der Chipkarten" von W. Rankl und W. Effing, 3. Auflage, 1999, Kapitel 4.4, Seiten 137-144. So weisen z.B. die im Haldenspeicher eines tragbaren Datenträgers enthaltenen Datenobjekte üblicherweise eine Prüfsumme auf, die sich auf das gesamte Datenobjekt oder einen Teil davon bezieht. Durch die Verwendung von Fehlererkennungs- und/ oder Fehlerkorrurcodes, insbesondere von Prüfsummen, lassen sich zum einen systembedingte Datenfehler, etwa durch zeitbedingte Ladungsverluste oder durch Softwarefehler verursachte, erkennen. Vor allem werden aber Fehler erkannt, die durch Angriffe von außen, etwa durch DFA-Attacken, gezielt verursacht werden, um Zugriff auf geschützte Daten zu erhalten. Dies gilt besonders auch für die Umsetzdaten, die im Falle eines erfolgreichen Störungsangriffes auf wichtige Datenobjekte verweisen können. Es ist deshalb wünschenswert, auch die Umsetzdaten - z.B. die Umsetztabelle - durch eine oder mehrere Prüfsummen abzusichern.

Eine Prüfsummensicherung der Umsetzdaten führt jedoch zu erheblichen Performanzproblemen bei der Defragmentierung des Haldenspeichers. Dies liegt daran, dass bei jeder Verschiebung eines Datenobjekts erstens der entsprechende Eintrag in den Umsetzdaten geändert werden muss und zweitens eine neue Prüfsumme für die Umsetzdaten berechnet und gespeichert werden muss. Da im Zuge der Defragmentierung potentiell viele Datenobjekte verschoben werden, stellen die beiden Schreibvorgänge pro Datenobjekt einen erheblichen Aufwand dar.

Eine Minimierung der Anzahl von Schreibvorgängen ist besonders wünschenswert, wenn sich der Haldenspeicher in einem nichtflüchtigen überschreibbaren Speicher - z.B. einem EEPROM - befindet. Dies ist beispielsweise bei tragbaren Datenträgern in der Regel der Fall. Bei EEPROMs benötigt jeder Schreibvorgang beträchtliche Zeit und führt überdies zu einer Belastung der Speicherzellen, die nur eine beschränkte Lebensdauer aufweisen.

Aus der WO 99/32973 ist es bekannt, zur eindeutigen Identifizierung und zur Sicherstellung der Unbeschädigtheit einer Datei diese mit einer CRC-Checksumme und einer Versionsinformation zu versehen.

Aus der US 2003/0229769 ist weiterhin ein Vorschlag zur Vergrößerung des Speicherraums bei Java-Karten bekannt. Dieser ist durch Verwendung von 16-Bit-Adressen in üblichen JVMs auf 64 Kilobyte beschränkt. Vorgeschlagen wird die Verwendung eines Indexreferenzierungssystems, das auf der Einführung einer zusätzlichen Tabelle, der "global reference table" beruht. In diese werden Programmelementreferenzen eingetragen, die jeweils eine Paketkennung sowie die tatsächliche Adresse des Programmelementes enthalten. Mit Hilfe einer "object manager table" werden - auf ähnliche Weise - Objektreferenzen tatsächliche Adressen zugeordnet. Über die Referenztabellen können Komponenten bzw. Pakete leicht gelöscht werden. Das System soll dabei so betrieben werden, daß nach dem Löschen von Komponenten entstandene Speicherfreiräume zuerst wieder belegt werden.

Die Erfindung hat die Aufgabe, eine Technik zur Verwaltung von Datenobjekten in einem regelmäßig zu defragmentierenden Haldenspeicher vorzuschlagen, die eine hohe Effizienz bei guter Absicherung gegen Fehler und/oder Manipulationen aufweist. In manchen Ausgestaltungen soll die Erfindung ferner besonders gut für die Verwendung bei tragbaren Datenträgern geeignet sein.

Erfindungsgemäß wird diese Aufgabe gelöst durch ein Verfahren gemäß Anspruch 12, eine programmgesteuerte Vorrichtung gemäß Anspruch 11 und ein Computerprogrammprodukt nach Anspruch 13. Die abhängigen Ansprüche definieren optionale Merkmale mancher Ausgestaltungen der Erfindung.

Die Erfindung beruht auf der Grundidee, die Berechnung einer Prüfsumme eines Datenobjekts derart auszugestalten, dass zumindest ein Teil des Datenobjekts und eine dem Datenobjekt zugeordnete logische Referenz in die Prüfsummenberechnung eingehen. Durch diese Maßnahme wird erreicht, dass die Prüfsumme das Datenobjekts neben dem Inhalt des Datenobjekts auch den Vorgang der Dereferenzierung - also die Zuordnung des Datenobjekts zu der logischen Referenz - absichert. Eine gesonderte Prüfsummensicherung der für die Dereferenzierung verwendeten Umsetzdaten ist dann nicht mehr erforderlich.

Die Erfindung hat den erheblichen Vorteil, dass für eine Defragmentierung des Haldenspeichers wesentlich weniger Prüfsummenberechnungs- und Schreibvorgänge erforderlich sind als dies etwa bei der bisher üblichen gesonderten Prüfung von Umsetzdaten und Datenobjekten der Fall ist. Da die Korrektheit der Umsetzdaten nicht durch einen gesonderten Prüfsummenvergleich überprüft zu werden braucht, wird der Dereferenzierungsvorgang bei einem Zugriff auf Datenobjekte beschleunigt.

In vorteilhafter Weise wird auch die Durchführung einer Defragmentierung beschleunigt, da jeweils ausgehend von einem ggf. zu verschiebenden Datenobjekt leicht dessen logische Referenz gefunden werden kann.

Die Erfindung gestattet es dabei zuverlässig, durch das System bedingte sowie vorsätzlich herbeigeführte Datenfehler in den Datenobjekten zu erkennen.

Der Begriff "Datenobjekt" ist im vorliegenden Dokument in seiner breitesten Bedeutung als jeder Dateneintrag im Haldenspeicher zu verstehen. Insbesondere ist dieser Begriff nicht auf Objekte im Sinne der objektorientierten Programmierung beschränkt, auch wenn manche Ausgestaltungen der Erfindung zur Verwendung bei *Java-Card*-Laufzeitumgebungen oder Laufzeitumgebungen anderer objektorientierter Sprachen vorgesehen sind. Auch der Begriff "Prüfsumme" ist in seiner breitesten Bedeutung als jeder fehlererkennende oder fehlerkorrigierende Code zu verstehen.

Ausgestaltungen der Erfindung sind zur Berechnung und Speicherung einer Prüfsumme für ein neues oder inhaltlich geändertes Datenobjekt und/oder zum Prüfsummenvergleich bei einem Lesezugriff auf ein bestehendes Datenobjekt vorgesehen.

In manchen Ausführungsformen der Erfindung erfolgt die Prüfsummenberechnung derart, dass aus dem Datenobjekt und der Prüfsumme - letztere ist in manchen Ausgestaltungen in einem Prüfsummenfeld des Datenobjekts gespeichert - die logische Referenz des Datenobjekts ermittelbar ist. Diese Möglichkeit zur umgekehrten Dereferenzierung führt zu einer weiteren Effizienzsteigerung der Speicherbereinigung. Um die umgekehrte Dereferenzierung zu ermöglichen, kann beispielsweise die Prüfsummen-Berechnungsfunktion aus einer Zwischenprüfsummen-Berechnungsfunktion und einer in mindestens einem Argument umkehrbaren Funktion - z.B. der Exklusiv-Oder-Funktion - zusammengesetzt sein.

Das erfindungsgemäße Computerprogrammprodukt kann ein körperliches Medium sein, beispielsweise ein Halbleiterspeicher oder eine Diskette oder eine CD-ROM, auf dem ein Programm zur Ausführung des erfindungsgemäßen Verfahrens gespeichert ist. Das Computerprogrammprodukt kann jedoch auch ein nichtkörperliches Medium sein, beispielsweise ein über ein Computernetzwerk übermitteltes Signal. In manchen Ausgestaltungen ist das Computerprogrammprodukt zur Verwendung bei der Herstellung von tragbaren Datenträgern vorgesehen.

In manchen Ausgestaltungen weisen die programmgesteuerte Vorrichtung - z.B. ein tragbarer Datenträger - und/oder das Computerprogrammprodukt Merkmale auf, die den oben beschriebenen und/oder den in den Verfahrensansprüchen genannten Merkmalen entsprechen.

Weitere Merkmale, Vorteile und Aufgaben der Erfindung gehen aus der folgenden genauen Beschreibung von Ausführungsbeispielen und Ausführungsvarianten hervor. Es wird auf die schematischen Zeichnungen verwiesen, in denen zeigen:

Fig.1 ein Blockdiagramm eines tragbaren Datenträgers nach einem Ausführungsbeispiel der Erfindung,

Fig. 2 eine Darstellung der Organisation eines Haldenspeichers bei dem in Fig. 1 gezeigten Datenträger,

Fig. 3 einen Ausschnitt des Haldenspeichers von Fig. 2 mit einer Darstellung eines Defragmentierungsschritts,

Fig. 4 und Fig. 6 je eine Darstellung des Datenflusses bei der Berechnung einer Prüfsumme für ein neu angelegtes oder inhaltlich verändertes Datenobjekt,

Fig. 5 und Fig. 7 je eine Darstellung des Datenflusses bei einem Lesezugriff auf ein bestehendes Datenobjekt mit einem Prüfsummenvergleich, und

Fig. 8 eine Darstellung des Datenflusses bei der Berechnung einer logischen Referenz, die einem Datenobjekt zugeordnet ist.

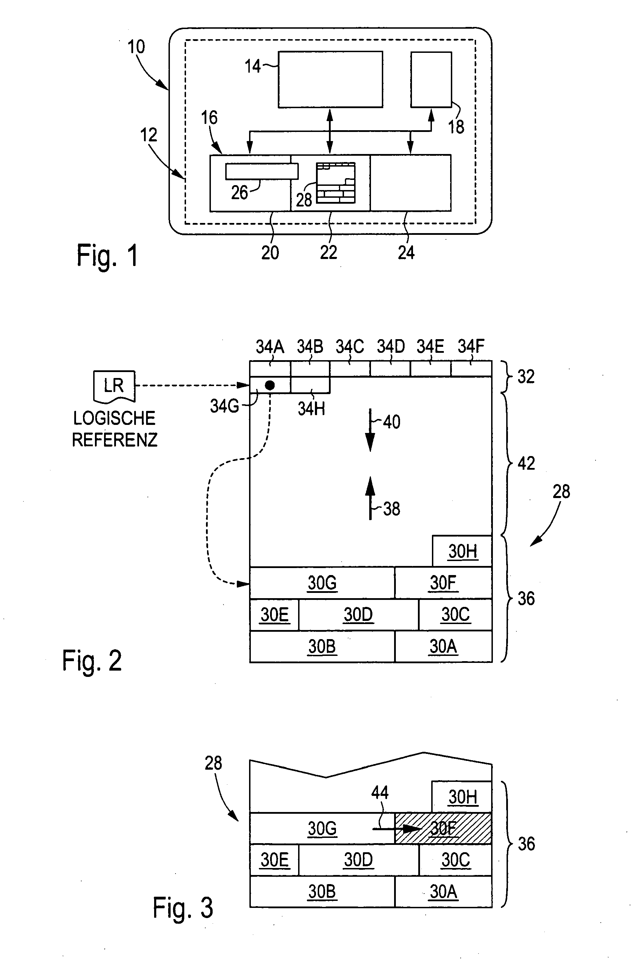

Der in Fig. 1 dargestellte Datenträger 10 ist im vorliegenden Ausführungsbeispiel eine Chipkarte gemäß dem *Java-Card*-Standard. In Ausführungsalternativen kann die Erfindung jedoch auch zur Verwaltung eines Haldenspeichers bei Datenträgern, die andere Betriebssysteme aufweisen, oder zur Verwaltung eines Haldenspeichers bei anderen programmgesteuerten Vorrichtungen - z.B. eingebetteten Systemen oder persönlichen Computern - eingesetzt werden.

Der Datenträger 10 weist einen Mikrocontroller 12 auf. In an sich bekannter Weise sind in dem Mikrocontroller 12 auf einem einzigen Halbleiterchip ein Prozessor 14, eine Speicherbaugruppe 16 und eine Kommunikationsschnittstelle 18 integriert. Die Speicherbaugruppe 16 weist einen Festwertspeicher 20, einen nichtflüchtigen überschreibbaren Speicher 22 und einen Arbeitsspeicher 24 auf. Beispielsweise können der Festwertspeicher 20 als maskenprogrammierbares ROM, der nichtflüchtige überschreibbare Speicher 22 als EEPROM oder Flash-Speicher, und der Arbeitsspeicher 24 als RAM ausgebildet sein.

In dem Festwertspeicher 20 - und zum Teil auch im nichtflüchtigen überschreibbaren Speicher 22 - sind Systemprogramme 26 enthalten, die zum Betrieb des Datenträgers 10 benötigt werden. In an sich bekannter Weise implementieren die Systemprogramme 26 eine *Java-Card*-Laufzeitumgebung, die ein oder mehrere Anwendungsprogramme - in Fig. 1 nicht gesondert gezeigt - ausführt. Hierbei verwalten die Systemprogramme 26 einen Haldenspeicher 28, der im nichtflüchtigen überschreibbaren Speicher 22 angelegt ist.

Fig. 2 zeigt eine beispielhafte Belegung des Haldenspeichers 28 während des Betriebs des Datenträgers 10. Im Haldenspeicher 28 sind diverse Datenobjekte 30A, 30B, 30C, ... angelegt, die im folgenden zusammenfassend mit 30x bezeichnet werden. Wie eingangs bereits erläutert, werden die Datenobjekte 30x nicht direkt, sondern über logische Referenzen LR adressiert. Die Zuordnung der logischen Referenzen LR zu den Datenobjekten 30x erfolgt mittels Umsetzdaten 32, die im Haldenspeicher 28 enthalten sind.

Die Umsetzdaten 32 enthalten für jedes Datenobjekt 30x einen korrespondierenden Eintrag 34A, 34B, 34C, ... - im folgenden zusammenfassend mit 34x bezeichnet. Fig. 2 stellt beispielhaft eine logische Referenz LR für das Datenobjekt 30G dar. Die logische Referenz LR zeigt jedoch nicht unmittelbar auf das Datenobjekt 30G, sondern verweist auf den zugeordneten Eintrag 34G in den Umsetzdaten 32. Erst dieser Eintrag 34G ermöglicht es, die aktuelle physikalische Adresse des Datenobjekts 30G im Haldenspeicher 28 zu ermitteln.

Im vorliegenden Ausführungsbeispiel bilden die Umsetzdaten 32 eine Umsetztabelle, deren Einträge 34x Versatzwerte (*Offsets*) sind, die - gegebenenfalls nach einer binären Verschiebung um eine oder mehrere Bitpositionen - die Lage der zugeordneten Datenobjekte 30x im Haldenspeicher 28 angeben. Die logischen Referenzen LR oder Bitabschnitte davon stellen dabei einen Index zur Adressierung der entsprechenden Einträge - z.B. 34G - in der Umsetztabelle dar.

In Ausführungsalternativen können die Umsetzdaten 32 anders aufgebaut sein und beispielsweise Paare mit je einer logischen Referenz LR und der Adresse des zugeordneten Datenobjekts 30x im Haldenspeicher 28 enthalten.

In dem in Fig. 2 gezeigten Ausführungsbeispiel belegen die Datenobjekte 30x einen Speicherbereich 36, der an ein Ende des Haldenspeichers 28 angrenzt und der, wenn neue Datenobjekte 30x angelegt werden, in Richtung des Pfeils 38 wächst. Beim Anlegen neuer Datenobjekte 30x werden auch entsprechende Einträge 34x zu den Umsetzdaten 32 hinzugefügt, so dass die Umsetzdaten 32 in Richtung des Pfeils 40 anwachsen. Zwischen den Datenobjekten 30x und den Umsetzdaten 32 weist der Haldenspeicher 28 einen freien Speicherbereich 42 auf, dessen Größe sich mit zunehmender Anzahl von Datenobjekten 30x und Einträgen 34x in den Umsetzdaten 32 verringert.

Wenn ein bestehendes Datenobjekt 30x nicht referenziert wird, dann ist es löschungsreif. In dem Ausschnitt von Fig. 3 ist dieser Zustand beispielhaft durch eine Schraffur des Datenobjekts 30F gezeigt. Löschungsreife Datenobjekte - z.B. 30F - werden von einem von Zeit zu Zeit angestoßenen Speicherbereinigungsvorgang (*Garbage Collection*) erkannt.

Der Speicherbereinigungsvorgang umfasst auch ein Defragmentieren des Haldenspeichers 28. Hierbei werden noch benötigte Datenobjekte - z.B. 30G und 30H - in Richtung des Pfeils 44 verschoben, um die durch die Löschung von Datenobjekten - z.B. 30F - entstandene Lücke oder Lücken wieder aufzufüllen und den zusammenhängenden freien Speicherbereich 42 zu vergrößern. Die zu den verschobenen Datenobjekten 30G und 30H gehörenden Einträge 34G und 34H in den Umsetzdaten 32 werden gemäß den neuen physikalischen Speicheradressen der Datenobjekte 30G und 30H aktualisiert, während die logischen Referenzen LR der Datenobjekte 30G und 30H unverändert bleiben.

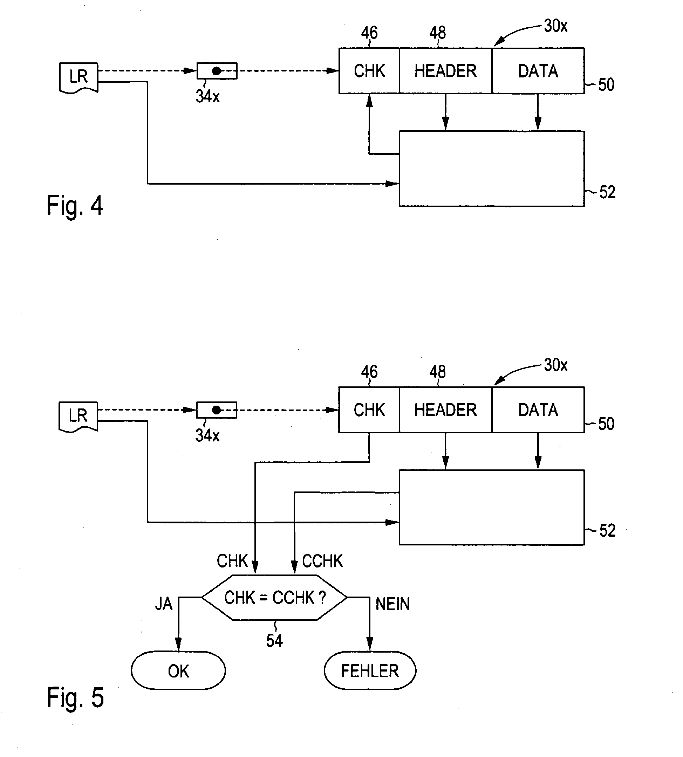

Fig. 4 bis Fig. 8 zeigen die Struktur der Datenobjekte 30x mit je einem Prüfsummenfeld 46 und zwei Datenfeldern, nämlich einem Verwaltungsdatenfeld 48 und einem Nutzdatenfeld 50. Das Verwaltungsdatenfeld 48 enthält an sich bekannte Verwaltungsinformationen HEADER, während das Nutzdatenfeld 50 die eigentlichen Daten DATA des Datenobjekts 30x aufnimmt. In dem Prüfsummenfeld 46 ist eine Prüfsumme CHK gespeichert, die bei der Anlage und bei jeder inhaltlichen Änderung des Datenobjekts 30x von einer Prüfsummen-Berechnungsfunktion 52 bestimmt wird.

Es ist ein erfindungsgemäßes Merkmal, dass die logische Referenz LR eines Datenobjekts 30x in dessen Prüfsumme CHK eingeht. In den hier beschriebenen Ausführungsbeispielen gehen ferner die Verwaltungsinformationen HEADER und die Nutzdaten DATA in die Prüfsumme CHK ein, so dass die Prüfsumme CHK alle drei genannten Komponenten absichert. Es sind jedoch auch Ausgestaltungen vorgesehen, bei denen nur ein Teil des Datenobjekts 30x von der Prüfsumme CHK abgesichert wird. In solchen Ausgestaltungen kann beispielsweise die Prüfsumme CHK nur aus der logischen Referenz LR und den Verwaltungsinformationen HEADER oder nur aus der logischen Referenz LR und den Nutzdaten DATA berechnet werden.

Die in Fig. 4 und Fig. 5 gezeigte Prüfsummen-Berechnungsfunktion 52 kann generell jede Funktion sein, die aus den Eingangswerten LR sowie HEADER und/oder DATA eine fehlererkennende oder fehlerkorrigierende Prüfsumme CHK bestimmt. Beispielsweise können XOR-Prüfsummen oder CRC-Prüfsummen verwendet werden, wie sie aus Kapitel 4.4 des bereits zitierten Buches "*Handbuch der Chipkarten*" bekannt sind. In einer besonders einfachen Ausgestaltung wird als Prüfsumme CHK die Exklusiv-Oder-Verknüpfung aller Bytes der oben genannten Eingangswerte LR, HEADER und DATA verwendet.

Die Prüfsumme CHK wird bei der Anlage und bei jeder inhaltlichen Änderung des Datenobjekts 30x berechnet und im Prüfsummenfeld 46 gespeichert; der entsprechende Datenfluss ist in Fig. 4 dargestellt.

Fig. 5 veranschaulicht den zu Fig. 4 korrespondierenden Vorgang bei einem Lesezugriff auf das Datenobjekt 30x. Hierbei wird durch dieselbe Prüfsummen-Berechnungsfunktion 52 wie in Fig. 4 mit denselben Eingangswerten LR, HEADER und DATA eine neu berechnete Prüfsumme CCHK erzeugt. Die aktuell berechnete Prüfsumme CCHK wird einem Vergleich 54 mit dem im Prüfsummenfeld 46 gespeicherten Wert CHK unterzogen. Stimmen die beiden Werte nicht überein, so liegt ein Fehler vor. Stimmen die beiden Werte dagegen überein, so belegt dies sowohl die Korrektheit der im Datenobjekt 30x enthaltenen Informationen als auch die Korrektheit der von der logischen Referenz LR ausgehenden Dereferenzierung. Insbesondere belegt ein erfolgreicher Vergleich 54 die Korrektheit des bei der Dereferenzierung verwendeten Eintrags 34x in den Umsetzdaten 32. Eine weitere Absicherung der Umsetzdaten 32 durch eine oder mehrere zusätzliche Prüfsummen ist daher nicht erforderlich.

Wie bereits oben erwähnt, müssen bei einer Defragmentierung des Haldenspeichers 28 diejenigen Einträge 34x der Umsetzdaten 32 geändert werden, die auf verschobene Speicherobjekte 30x verweisen. Da die Umsetzdaten 32 nicht mit eigenen Prüfsummen abgesichert sind, ist insofern jedoch keine Änderung von Prüfsummen erforderlich. Insbesondere bei umfangreichen Defragmentierungen wird hierdurch eine beträchtliche Anzahl von Schreiboperationen im nichtflüchtigen überschreibbaren Speicher 22 eingespart.

Im Zusammenhang mit einer Defragmentierung des Haldenspeichers 28 ist es in der Regel erforderlich, ausgehend von einem Datenobjekt 30x dessen zugeordnete logische Referenz LR zu ermitteln. Hierzu kann in einer ersten Ausgestaltung die logische Referenz LR jedes Datenobjekts 30x in dessen Verwaltungsinformationen HEADER gespeichert werden. Dies erfordert jedoch zusätzlichen Speicherplatz. In einer zweiten Ausgestaltung kann bei jeder Defragmentierung eine geeignete Zuordnungsliste (*Freelist*) dynamisch erzeugt werden. Auch hierfür sind jedoch Speicherplatz sowie Rechenzeit zur Erzeugung der Liste erforderlich.

Obwohl die beiden gerade genannten Ausgestaltungen durchaus praktikabel sind, ist eine weitere Verbesserung durch eine geeignete Wahl der Prüfsummen-Berechnungsfunktion 52 möglich. Die Prüfsummen-Berechnungsfunktion 52 muss hierbei die Eigenschaft haben, dass aus der Prüfsumme CHK bei Kenntnis der in die Prüfsummenberechnung eingehenden Datenfelder 48 und/ oder 50 des Datenobjekts 30x dessen logische Referenz LR bestimmbar ist.

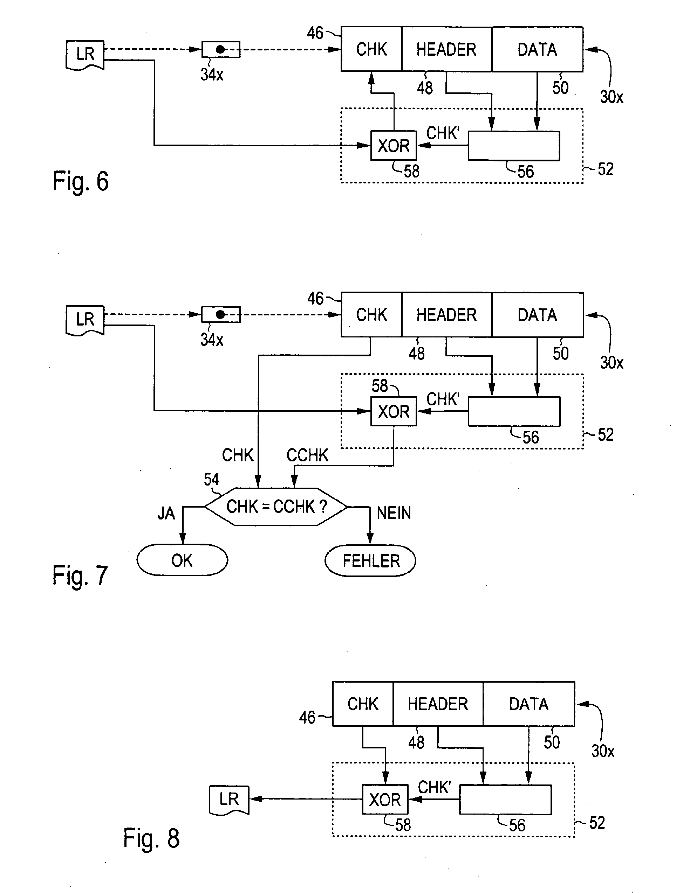

Fig. 6 bis Fig. 8 veranschaulichen eine geeignete Prüfsummen-Berechnungsfunktion 52, die aus einer Zwischenprüfsummen-Berechnungsfunktion 56 und einer in mindestens einem Argument umkehrbaren Funktion 58 zusammengesetzt ist. Die Zwischenprüfsummen-Berechnungsfunktion 56 bestimmt aus den Verwaltungsinformationen HEADER und den Nutzdaten DATA eine Zwischenprüfsumme CHK'. Hierbei bestehen für die Zwischenprüfsummen-Berechnungsfunktion 56 keine Einschränkungen; jeder fehlererkennende oder fehlerkorrigierende Code kann als Zwischenprüfsumme CHK' verwendet werden. In Ausführungsalternativen wird die Zwischenprüfsumme CHK' nicht aus allen Datenfeldern des Datenobjekts 30x, sondern nur aus Teilen davon - z.B. nur aus den Verwaltungsinformationen HEADER oder nur aus den Nutzdaten DATA - berechnet.

Bei der in Fig. 6 dargestellten Prüfsummenberechnung für ein neu angelegtes oder inhaltlich geändertes Datenobjekts 30x verknüpft die umkehrbare Funktion 58 die Zwischenprüfsumme CHK' mit der logischen Referenz LR des Datenobjekts 30x, um die Prüfsumme CHK zu erhalten. Diese Prüfsumme CHK wird in das Prüfsummenfeld 46 des Datenobjekts 30x eingeschrieben. Als umkehrbare Funktion 58 kann beispielsweise die Exklusiv-Oder-Funktion XOR verwendet werden; es gilt dann:

$$\text{CHK} := \text{LR XOR CHK'}$$

In Ausführungsalternativen können andere Berechnungsvorschriften als umkehrbare Funktion 58 verwendet werden, beispielsweise die Addition. Wesentlich ist lediglich, dass bei Kenntnis des Ergebnisses und eines Arguments das andere Argument bestimmbar ist.

In Fig. 7 ist ein Lesezugriff auf das Datenobjekt 30x veranschaulicht. Hierbei wird die oben beschriebene Prüfsummenberechnung nachvollzogen, also zunächst aus dem Datenobjekt 30x die Zwischenprüfsumme CHK' bestimmt und dann - unter Anwendung der umkehrbaren Funktion 58 mit der logischen Referenz LR als einem Argument - eine neue berechnete Prüfsumme CCHK gebildet, die ihrerseits in Schritt 54 mit der im Prüfsummenfeld 46 gespeicherten Prüfsumme CHK verglichen wird. Wieder gewährleistet eine Übereinstimmung der Prüfsummen CHK und CCHK sowohl die Korrektheit der im Datenobjekt 30x gespeicherten Werte als auch die Korrektheit der von der logischen Referenz LR ausgehenden Dereferenzierung.

Fig. 8 zeigt den für die Speicherbereinigung benötigten Vorgang der umgekehrten Dereferenzierung, bei dem aus dem Datenobjekt 30x dessen logische Referenz LR bestimmt werden soll. Auch hierbei wird zunächst die Zwischenprüfsumme CHK' berechnet. Aus der Zwischenprüfsumme CHK' und der im Prüfsummenfeld 46 des Datenobjekts 30x gespeicherten Prüfsumme CHK wird dann die logische Referenz LR ermittelt. Im vorliegenden Ausführungsbeispiel braucht hierzu lediglich die XOR-Funktion erneut angewendet zu werden, weil mit CHK = LR XOR CHK' auch LR = CHK XOR CHK' gilt. In Ausführungsalternativen, bei denen eine andere umkehrbare Funktion 58 - z.B. die Addition - eingesetzt wird, kann die Anwendung einer entsprechenden Umkehrfunktion - z.B. der Subtraktion - erforderlich sein.

Als optionaler Schritt kann die gemäß Fig. 8 ermittelte logische Referenz LR zur Fehlerkontrolle dereferenziert werden. Ein korrekter Verfahrensablauf wird dadurch angezeigt, dass die logische Referenz LR auf einen Eintrag 34x in den Umsetzdaten 32 verweist, der seinerseits auf das Datenobjekt 30x, aus dem die logische Referenz LR ermittelt wurde, zeigt.

Es versteht sich, dass die gerade beschriebenen Ausführungsformen und Ausführungsalternativen lediglich als Beispiele aufzufassen sind. Weitere Abwandlungen - insbesondere Kombinationen der oben beschriebenen Merkmale - sind für den Fachmann unmittelbar ersichtlich.

**Patentansprüche**

1. Verfahren zur Verwaltung von Datenobjekten (30x) in einem Haldenspeicher (28), wobei die Datenobjekte (30x) mit Prüfsummen (CHK) gesichert sind und der Zugriff auf die Datenobjekte (30x) über logische Referenzen (LR) erfolgt, deren Zuordnung zu den Datenobjekten (30x) durch Umsetzdaten (32) bestimmt wird, und wobei in die Berechnung einer Prüfsumme (CHK, CCHK) eines Datenobjekts (30x) zumindest ein Teil des Datenobjekts (30x) und eine dem Datenobjekt (30x) zugeordnete logische Referenz (LR) eingehen.

2. Verfahren nach Anspruch 1, **dadurch gekennzeichnet, dass** ein neues Datenobjekt (30x) im Haldenspeicher (28) angelegt oder der Inhalt eines vorhandenen Datenobjekts (30x) im Haldenspeicher (28) verändert wird, wobei eine Prüfsumme (CHK) berechnet und in einem Prüfsummenfeld (46) des Datenobjekts (30x) gespeichert wird, und wobei in die Berechnung der Prüfsumme (CHK) zumindest ein Teil des Datenobjekts (30x) und eine dem Datenobjekt (30x) zugeordnete logische Referenz (LR) eingehen.

3. Verfahren nach Anspruch 1, **dadurch gekennzeichnet, dass** ein Lesezugriff auf ein mit einer gespeicherten Prüfsumme (CHK) gesichertes Datenobjekt (30x) im Haldenspeicher (28) erfolgt, wobei eine neu berechnete Prüfsumme (CCHK), in deren Berechnung zumindest ein Teil des Datenobjekts (30x) und eine dem Datenobjekt (30x) zugeordnete logische Referenz (LR) eingehen, berechnet und mit der gespeicherten Prüfsumme (CHK) des Datenobjekts (30x) verglichen wird.

4. Verfahren nach einem der Ansprüche 1 bis 3, **dadurch gekennzeichnet, dass** das Datenobjekt (30x) zumindest ein Verwaltungsdatenfeld (48) mit Verwaltungsinformationen und zumindest ein Nutzdatenfeld (50) mit Nutzdaten aufweist, und dass in die Berechnung der Prüfsumme (CHK, CCHK) die Verwaltungsinformationen und/oder die Nutzdaten eingehen.

5. Verfahren nach einem der Ansprüche 1 bis 4, **dadurch gekennzeichnet, dass** die Berechnung der Prüfsumme (CHK) des Datenobjekts (30x) durch eine Prüfsummen-Berechnungsfunktion (52) erfolgt, die so ausgestaltet ist, dass bei Kenntnis des Inhalts des Datenobjekts (30x) und der Prüfsumme (CHK) die logische Referenz (LR) des Datenobjekts (30x) ermittelbar ist.

6. Verfahren nach einem der Ansprüche 1 bis 4, **dadurch gekennzeichnet, dass** die Berechnung der Prüfsumme (CHK, CCHK) des Datenobjekts (30x) durch eine Prüfsummen-Berechnungsfunktion (52) erfolgt, die aus einer Zwischenprüfsummen-Berechnungsfunktion (56) und einer in mindestens einem Argument umkehrbaren Funktion (58) gebildet ist.

7. Verfahren nach Anspruch 6, **dadurch gekennzeichnet, dass** die in mindestens einem Argument umkehrbare Funktion (58) eine Exklusiv-Oder-Funktion ist.

**8.** Verfahren nach einem der Ansprüche 1 bis 7, **dadurch gekennzeichnet, dass** die Umsetzdaten (32) frei von einer eigenen Prüfsummensicherung sind.

**9.** Verfahren nach einem der Ansprüche 1 bis 8, **dadurch gekennzeichnet, dass** bei einer Defragmentierung des Haldenspeichers (28) zumindest manche der Datenobjekte (30x) unter Anpassung der entsprechenden Einträge (34x) in den Umsetzdaten (32) verschoben werden.

**10.** Verfahren nach einem der Ansprüche 4 bis 9, **dadurch gekennzeichnet, daß** zur Durchführung einer Bereinigung des Haldenspeichers (28) eine umgekehrte Dereferenzierung ausgeführt wird, indem über das Verwaltungsdatenfeld (48) und das Nutzdatenfeld (50) eine Zwischenprüfsumme (CK') gebildet und durch Verknüpfung mit der Prüfsumme (CHK) sodann die logische Referenz (LR) des Datenobjekts (30x) bestimmt wird.

**11.** Verfahren nach einem der Ansprüche 1 bis 10, **dadurch gekennzeichnet, dass** das Verfahren durch einen Prozessor (14) eines als *Java Card* ausgestalteten Datenträgers (10) ausgeführt wird.

**12.** Programmgesteuerte Vorrichtung, insbesondere tragbarer Datenträger (10), mit einem Prozessor (14) und mindestens einem Speicher (20, 22, 24), wobei der Speicher (20, 22, 24) Programmbefehle enthält, die den Prozessor (14) zur Ausführung eines Verfahrens nach einem der Ansprüche 1 bis 11 veranlassen.

**13.** Computerprogrammprodukt, das Programmbefehle aufweist, die eine programmgesteuerte Vorrichtung veranlassen, ein Verfahren nach einem der Ansprüche 1 bis 11 auszuführen.

Fig. 1

LR

LOGISCHE
REFERENZ

Fig. 2

Fig. 3

8

46    48         30x

| CHK | HEADER | DATA | 50 |

52

Fig. 4

46    48         30x

| CHK | HEADER | DATA | 50 |

52

CHK        CCHK

CHK = CCHK ?

JA                    NEIN

OK              FEHLER

54

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005093580 A1
- WO 9932973 A

- US 20030229769 A

**In der Beschreibung aufgeführte Nicht-Patentliteratur**

- **W. RANKL ; W. EFFING.** Handbuch der Chipkarten. 1999, 137-144